# EUROPEAN PATENT SPECIFICATION

(11) **EP 3 167 248 B1**
(45) Date of publication and mention of the grant of the patent: **29.08.2018**
(21) Application number: 15763427.0
(22) Date of filing: 10.07.2015
(51) Int. Cl.: G01D 5/20, G01D 18/00, G01P 3/44

(54) **PROCESS AND DEVICE FOR ADJUSTING ROTARY ENCODER**
VERFAHREN UND VORRICHTUNG ZUR EINSTELLUNG EINES DREHGEBERS
PROCÉDÉ ET DISPOSITIF DE RÉGLAGE DE CODEUR ROTATIF

(30) Priority: 11.07.2014 SI 201400257
(43) Date of publication of application: 17.05.2017
(73) Proprietor: RLS Merilna tehnika d.o.o., 1218 Komenda (SI)
(72) Inventor: NOVAK, Janez, 1218 Komenda (SI); DOLSAK, Gregor, 1218 Komenda (SI); SMID, Blaz, 1218 Komenda (SI)
(74) Representative: Macek, Gregor
(86) International application number: PCT/SI2015/000026
(87) International publication number: WO 2016/007096

(56) References cited:
- EP-A1- 2 325 612
- US-A1- 2013 018 619
- US-A1- 2013 088 215
- US-A1- 2013 338 955
- US-A1- 2014 195 185

## Description

This invention relates to a process and device for adjusting a rotary encoder, i.e. the absolute magnetic rotary encoder with Hall elements which, when positioned in the form of a circle, detect the magnetic field of a diametrically polarised permanent magnet.

### State of the art

One of the principle functions of the absolute magnetic rotary encoders with Hall effect sensors positioned in the form of a circle is detection of the magnetic field of a diametrically polarised permanent magnet. By processing signals generated by the Hall effect sensors, it is possible to determine the orientation of the permanent magnet in relation to the Hall effect sensors. The semiconductor device fabrication process makes it possible that the Hall effect sensors, as well as the electronic circuit which enables processing of signals, are integrated on the same semiconductor die, i.e. the integrated circuit (IC). The integrated circuit with the Hall effect sensors and signal processing circuit is called the sensor circuit, and the centre of the circle with the Hall effect sensors is the sensor circuit centre. The packaged sensor circuit (the sensor chip) is most frequently mounted onto a printed circuit board along with additional electronic components, such as saving of circuit functioning parameters, output signal conditioning, cable connections, etc.

In a typical application the actuator magnet is inserted into a magnet holder and this holder attached at the end of the shaft, the rotation angle of which is being measured. The printed circuit board with the sensor chip, i.e. the rotary encoder, is mounted at the end of the shaft, so that the magnet is rotating directly over the sensor chip.

The accuracy of such a rotary encoder depends substantially on the magnetic properties of the actuator magnet related to its geometry as well as matching between the magnet rotation centre and sensor circuit centre. We usually cannot influence the quality of the magnets themselves; however, we can eliminate inappropriate ones by selection. Thus we can achieve that the magnets in the magnet holder are alike regarding magnetic and geometrical properties.

However, the interacting position of the magnet and the sensor circuit is a different case. The sensor circuit position inside the sensor chip is subject to change to a limited extent, since it is determined by the process of encapsulation of the sensor circuit into the chip package. The sensor chip position in relation to the printed circuit board during the soldering process (soldering chip to the printed circuit relation to the printed circuit board during the soldering process (soldering chip to the printed circuit board) and the position of the printed circuit board in relation to the rotation axis of the magnet during the magnet and printed circuit board installation process at the end user's facility are likewise subject to change.

During the magnet rotation over the sensor chip two sinusoidal signals with one period per magnet revolution are generated in the sensor circuit which are phase shifted to one another for a quarter of the period. The interpolation block inside the sensor circuit evaluates the current values of both sinusoidal signals appropriately and converts them into magnet orientation information in relation to the sensor circuit. The uniform sensitivity of the Hall effect sensors, the magnet quality, the matching of the magnet rotation axis with the sensor circuit centre and the distance between these two have a direct effect on the form of the sinusoidal signals. Magnet rotation information which is calculated by the interpolation block differs least from the actual magnet rotation value when the sinusoidal signals have the same amplitude, no offset and when they are phase-shifted for exactly a quarter of the period.

In general, due to different properties and installation of the magnets in relation to the sensor circuit, the amplitudes of the sinusoidal signals differ, the offsets do not equal zero and the amplitudes are not phase-shifted for exactly a quarter of the period. During the adjustment process of the rotary encoder in the production it is possible to adjust some of the electric parameters of the sensor circuit in such a way that the sinusoidal signals have equal amplitudes, minimized offsets and the right phase-shift before the interpolation. The adjusted electric parameter values for the sensor circuit are stored into memory, which is also part of the sensor circuit, and thus are not lost, not even after the sensor circuit is switched off from the power supply. It is said they are written into the sensor circuit.

The values of the electric parameters of the sensor circuit, with which the form of the sinusoidal signals can be corrected and which provide for the minimum difference between the rotation angle value returned by the rotary encoder and the actual rotation angle value of the magnet, can be determined by various methods. One method of correction consists of recording the sinusoidal signals in relation to the actual magnet rotation angle, whereby the magnet rotation angle value is being measured with a reference encoder, the error of which is known and, at the same time, is smaller than the angular resolution of the sensor circuit. Electric parameters for adjusting the sensor circuit are determined on the basis of analysis of both sinusoidal signals. In the second method the rotation angle returned by the sensor circuit is recorded in relation to the actual magnet rotation angle measured by the reference encoder. By analysing the difference between both rotation angles, i.e. the error values, electric parameters for the sensor circuit are determined / calculated based on the knowledge how the amplitudes, the offsets and the phase-shift of the sinusoidal signals effect the error values. Accordingly, after these electric parameters have been written into the sensor circuit, the encoder accuracy is better than before. In both above stated methods a reference encoder is required for recording the sinusoidal signals / the error.

However, as to written electric parameters the error proves to be minimal only regarding that interrelated position of the magnet centre and the printed circuit centre, which has been achieved during the adjustment in the production and which is altogether difficult to resume later on at the user's facility. The problem of simple and repeatable positioning of the printed circuit board with the sensor chip in relation to the position of the magnet of the magnet rotary encoder can be effectively solved by the invention described in the patent document SI 22966**.** If the use of a tool for centric installation of the magnet rotary encoder is out of the question due to space or other limitations, and the interrelated position of the magnet centre and the sensor circuit centre cannot be reliably repositioned in some other way, the error proves to be greater after the installation compared to that after the adjustment. In order to achieve accuracy which the encoder is capable of, we need to determine the electric parameters for the sensor circuit anew, for which a reference encoder measuring the actual magnet rotation angle is required. However, this is practically impossible at the user's facilities after the installation of the encoder.

Accuracy improving methods after the installation of the rotary encoder (comprising a measuring ring attached to the rotating part and a separate read head detecting the relative position of the read head and measuring ring) are the subject of several inventions. For instance, the patent document US7797981 describes a method, through which by using one or more additional read heads the encoder error can be determined after the installation of the measuring ring without a reference encoder. The error corrections are then permanently written into the counting unit or into the controller unit to which the encoder reading head is connected. Additional read heads used for determining encoder error are removed, since no longer required.

In document US 2013/0018619 a physical quantity detection apparatus is disclosed wherein the output signal is analogue. The correction value calculation section calculates the correction value of the analogue output signal based on primary error amounts that are differences between post-interpolation actual analogue output values calculated by executing a linear function interpolation process to the values based on the actual output values within a predetermined physical quantity range and the values based on the actual output values corresponding to the post-interpolation actual output values.

In document US 2013/0338955 sensor calibrating systems which relate to the correction of positional vector-valued sensors are disclosed. Systems are using a variety of calibration processes which include fixed-angle calibration, knowing-angle calibration, ortho-calibration and 3-axis gimbal calibration. Systems further include various weighting schemes to provide fine-tuned data which are used for real-time sensor correction calculation, i.e. for final correction vector.

The theme and objective of this invention are related to the process and device, which will provide for simple determining of electric parameters for the sensor circuit after the final installation of the magnet and printed circuit board, keeping thus the encoder error as minimal as possible.

### Process description:

The invention will be described by means of a preferred embodiment and a figure which shows:

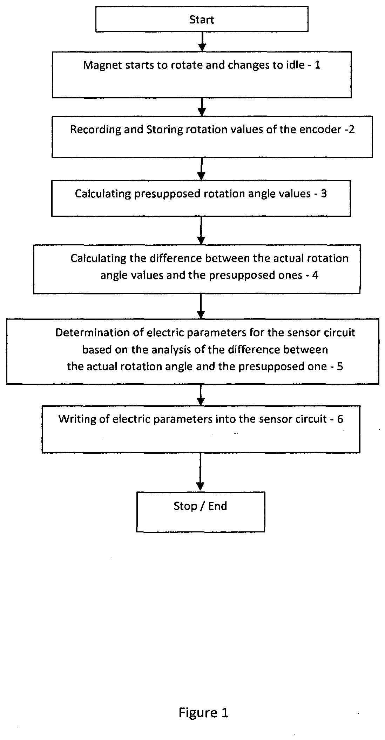

Figure 1: shows a schematic diagram of the process for rotary encoder adjustment.

After having inserted the actuator magnet into the rotation shaft and after having installed the printed circuit board at the user's facility, we trigger the magnet to make one or several revolutions over the sensor circuit (1), whereby we record and store the rotation angle returned by the rotary encoder (2), depending on time. After having finished the recording, we calculate a presupposed rotation angle in the time domain (4).

If the actuator magnet rotates fast enough, we can presuppose - in case that the moment of inertia of the body the magnet is attached to is big enough - that the rotation speed during the adjustment procedure does not change. Therefore, let us presuppose that the actual rotation angle of the magnet within one revolution gradually increases or decreases, depending on the rotation direction. For each measured rotation angle value we calculate the rotation angle value which within one revolution is a linear function of time. From the difference between the measured and calculated presupposed rotation angle values (i.e. from the error) and by analysing the error within one revolution we then establish such electric parameter values for the sensor circuit that the error after the change of the electric parameters is smaller than before the change (5).

A similar method is applied when the magnet rotation speed changes during the adjustment procedure. Likewise, we record the rotation angle returned by the encoder, depending on time, within several revolutions of the magnet. Time intervals between two measured values should be as short as to enable the recording of nearly all positions of the encoder. From time difference values between consecutive revolutions with the same rotation angle value we then determine the period for each recorded rotation angle value. From periods we first calculate the angular velocity in relation to the rotation angle value and afterwards also the angular velocity as the function of time. By integrating the products of the angular velocity as the function of time and the time interval between two measured values, we calculate the presupposed rotation angle, depending on time. The calculated presupposed rotation angle is then subtracted from the measured actual rotation angle values and thus we obtain the error information within several revolutions. By analysing the error, we determine the electric parameter values for the sensor circuit anew, so that after the new electric parameters have been written into the sensor circuit, the newly measured difference is smaller than that before the change. By analysing the error calculated during several revolutions, the right electric parameter values are determined even more reliably.

### Device description:

In the preferred embodiment the device for rotary encoder adjustment consists of a circuit with a microcontroller. After having attached the magnet to the shaft the rotation of which is being measured and after having installed the encoder sensor circuit, we connect the adjustment device to the sensor circuit. The shaft the magnet is attached to is at the same time the rotation shaft of the servo-motor. We let the servo-motor rotate under power-supply for a while, and when it reaches the planned rotational speed, we turn off the power-supply and let the servo-motor become idle. The - microcontroller is programmed so as to read and save the rotation angle values, i.e. the shaft position. The interval between two readings is fixed or variable. The interval is selected so as to enable the microcontroller to record most of the encoder positions during one revolution of the shaft. The microcontroller stores rotation angle data along with the time data (time-related request for rotation angle value) into memory. The storing ends after one or more revolutions. Afterwards the measured values are assessed according to the above described method: the microcontroller calculates the period values of the shaft for each stored rotation angle value by means of an algorithm. The periods are calculated as a difference between the time values of two rotation angles which differ by one revolution. For each period the programme calculates the corresponding angular velocity, first as the rotation angle function and then as the function of time. The theoretical rotation angle, depending on time, is calculated according to algorithm by integrating products of the angular velocity as the function of time and the time interval between two measured values. The theoretical rotation angle is one measured in a situation where the two sinusoidal signals have the same amplitude, no offset and when they are phase -shifted for exactly a quarter of the period. The microcontroller then subtracts as programmed the calculated presupposed rotation angle from the measured actual rotation angles, and gets the error within one or more revolutions. By applying the error analysis, the electric parameter values for the sensor circuit are defined anew. After new electric parameter values have been written into the sensor circuit (6), which is likewise done by the microcontroller, the newly measured difference between the actual rotation angle and the calculated one is smaller than that before the change. By analysing the error calculated during several revolutions, the electric parameter values are determined more reliably.

Instead of a microcontroller some other technical solution could be applied for this adjustment device, such as a FPGA circuit or even a personal computer programme with an additional input-output card providing for communication with the encoder.

It is also possible to attach an adjustment device realised by a microcomputer or a FPGA circuit to the sensor circuit inside the encoder housing, thus having it fully integrated into the encoder.

The above adjustment process and device can likewise be applied also in case when the sensor circuit and Hall elements are not integrated on the same solid-state circuit, but consist of discrete Hall elements and a separate electronic circuit for processing signals. Also, other magnetic field sensors can be used instead of Hall elements, for instance magneto-resistive sensors of the AMR type (Anisotropic Magneto resistance), GMR type (Giant Magneto Resistance) or TMR type (Tunnelling Magneto Resistance).

## Claims

1. A rotary encoder adjustment process, wherein said rotary encoder includes an actuator magnet and a sensor circuit, **characterized in that** the process includes the steps of:
- rotating the actuator magnet once or several times over the sensor circuit (1);
- recording and storing actual rotation angles together with the time of detection (2);
- calculating theoretical values of the rotation angles which correspond to the same time of detection, as time-dependent presupposed values of the rotation angles (3);
- subtracting the time-dependent presupposed values of the rotation angles from the recorded actual rotation angle values to determine a difference (4);
- determining new electric parameter values for the sensor circuit by analysing the determined difference, wherein said electric parameter values are selected so that a newly measured difference between the presupposed rotation angle values and recorded actual rotation angles using said electric parameter values is smaller than the determined difference (5);
- writing the new electric parameter values into the sensor circuit (6).

2. A process according to claim 1 **characterized in that** in the case the rotation speed of the actuator magnet does not change during the adjustment process, the presupposed values of the rotation angles are calculated in such a way that with each actual recorded rotation angle the presupposed rotation angle value is calculated as if returned by the sensor circuit at gradually increasing or decreasing actual rotation angle values.

3. A process according to claim 1 **characterized in that** in the case the rotation speed of the actuator magnet changes during the adjustment process, the actual rotation angles are recorded in time intervals, which are short enough to cover most of the positions of the encoder; a period for each recorded rotation angle value is determined from the time difference between successive revolutions with the same rotation angle value; an angular velocity as a function of time is calculated from the periods and the time-dependent presupposed rotation angles are calculated by integrating products of the angular velocity and the time interval between two measured values.

4. A device for adjusting a rotary encoder, the device being adapted to execute the process according to claims 1 to 3, wherein the device is connectable to the encoder with the sensor circuit, after the encoder and the actuator magnet have been installed.

5. A system comprising the device and the rotary encoder according to claim 4 **characterized in that** the device is integrated inside a housing of the encoder.

## Patentansprüche

1. Verfahren zur Einstellung eines Drehgebers, wobei der Drehgeber einen Aktuatormagneten und eine Sensorschaltung umfasst, **dadurch gekennzeichnet, dass** das Verfahren die Schritte umfasst:
- einmaliges oder mehrmaliges Drehen des Aktuatormagneten über die Sensorschaltung (1);
- Aufnahme und Speicherung von Ist-Drehwinkeln zusammen mit dem Erfassungszeitpunkt (2);
- Berechnen von theoretischen Werten der Drehwinkel, die dem gleichen Erfassungszeitpunkt entsprechen, wie die zeitabhängigen voraussichtlichenWerte der Drehwinkel (3);
- Subtrahieren der zeitabhängigen vorausgesetzten Werte der Drehwinkel von den erfassten Ist-Drehwinkelwerten, um die Differenz zu bestimmen (4);
- Bestimmung neuer elektrischer Parameterwerte für die Sensorschaltung durch Analyse der ermittelten Differenz, wobei die elektrischen Parameterwerte so gewählt werden, dass ein neu gemessene Differenz zwischen den vorausgesetzten Drehwinkelwerten und den erfassten Ist-Drehwinkeln anhand dieser elektrischen Parameterwerte kleiner als die ermittelte Differenz ist (5);
- Schreiben der neuen elektrischen Parameterwerte in die Sensorschaltung (6).

2. Verfahren nach Anspruch 1, **dadurch gekennzeichnet, dass**, falls sich die Drehzahl des Aktuatormagneten während des Einstellungsvorgangs nicht ändert, die vorausgesetzten Werte der Drehwinkel derart berechnet werden, dass bei jedem aktuellen erfassten Drehwinkel der voraussichtliche Drehwinkelwert berechnet wird, als ob er von der Sensorschaltung, mit allmählich ansteigenden oder abfallenden Ist-Drehwinkelwerten, zurückgeführt wird.

3. Verfahren nach Anspruch 1, **dadurch gekennzeichnet, dass** sich bei dem Einstellungsvorgang die Drehzahl des Aktuatormagneten ändert, die Ist-Drehwinkel werden in zeitlichen Abständen, die kurz genug sind, um die meisten Positionen des Kodierers abzudecken, erfasst; aus der Zeitdifferenz zwischen aufeinanderfolgenden Umdrehungen mit gleichem Drehwinkelwert wird eine Periode für jeden erfassten Drehwinkelwert ermittelt; aus den Perioden wird eine Winkelgeschwindigkeit als Funktion der Zeit berechnet und die zeitabhängigen vorausgesetzten Drehwinkel werden durch Integrieren der Produkte von Winkelgeschwindigkeit und den Zeitintervallen zwischen zwei Messwerten berechnet.

4. Vorrichtung zur Einstellung eines Drehgebers, wobei die Vorrichtung dazu eingerichtet ist, das Verfahren nach den Ansprüchen 1 bis 3 auszuführen, wobei die Vorrichtung mit dem Kodierer, mit der Sensorschaltung verbindbar ist, nachdem der Kodierer und der Aktuatormagnet angeordnet worden sind.

5. Anordnung mit der Vorrichtung und dem Drehgeber nach Anspruch 4, **dadurch gekennzeichnet, dass** die Vorrichtung in einem Gehäuse des Kodierers integriert ist.

## Revendications

1. Un procédé de réglage de codeur rotatif, ledit codeur rotatif comprenant un aimant d'actionneur et un circuit de capteur, **caractérisé en ce que** le procédé comprend les étapes suivantes :
- la rotation de l'aimant d'actionneur une ou plusieurs fois sur le circuit de capteur (1) ;
- l'enregistrement et le stockage d'angles de rotation réels conjointement avec l'instant de détection (2) ;
- le calcul des valeurs théoriques des angles de rotation qui correspondent au même instant de détection, en tant que valeurs présupposées dépendantes du temps des angles de rotation (3) ;
- la soustraction des valeurs présupposées dépendantes du temps des angles de rotation à partir des valeurs réelles des angles de rotation enregistrées pour déterminer une différence (4) ;
- la détermination de nouvelles valeurs de paramètres électriques pour le circuit de capteur par analyse de la différence déterminée, lesdites valeurs de paramètre électrique étant sélectionnées de telle sorte qu'une différence nouvellement mesurée entre les valeurs présupposées des angles de rotation et les angles de rotation réels enregistrés à l'aide desdites valeurs de paramètres électriques est inférieure à la différence déterminée (5) ;
- l'écriture des nouvelles valeurs de paramètres électriques dans le circuit de capteur (6).

2. Procédé selon la revendication 1 **caractérisé en ce que**, dans le cas où la vitesse de rotation de l'aimant d'actionneur ne change pas pendant le processus de réglage, les valeurs présupposées des angles de rotation sont calculées de telle sorte que, avec chaque angle de rotation réel enregistré , la valeur présupposée des angles de rotation est calculée comme si elle était renvoyée par le circuit de capteur pour augmenter ou diminuer progressivement les valeurs réelles des angles de rotation.

3. Procédé selon la revendication 1 **caractérisé en ce que**, dans le cas où la vitesse de rotation de l'aimant d'actionneur change pendant le procédé de réglage, les angles de rotation réels sont enregistrés dans des intervalles de temps, qui sont suffisamment courts pour couvrir la plupart des positions du codeur; une période pour chaque valeur d'angle de rotation enregistrée est déterminée à partir de la différence de temps entre des révolutions successives ayant la même valeur d'angle de rotation ; une vitesse angulaire en fonction du temps est calculée à partir des périodes et les angles de rotation présupposés dépendant du temps sont calculés par intégration de produits de la vitesse angulaire et de l'intervalle de temps entre deux valeurs mesurées.

4. Un dispositif de réglage d'un codeur rotatif, le dispositif étant conçu pour exécuter le procédé selon les revendications 1 à 3, le dispositif pouvant être connecté au codeur avec le circuit de capteur, après que le codeur et l'aimant d'actionneur ont été installés.

5. Un système comprenant le dispositif et le codeur rotatif selon la revendication 4 **caractérisé en ce que** le dispositif est intégré à l'intérieur du boîtier du codeur.
